# EUROPÄISCHE PATENTANMELDUNG

(11) **EP 0 825 405 A1**
(43) Veröffentlichungstag der Anmeldung: **25.02.1998**
(21) Anmeldenummer: 97810336.4
(22) Anmeldetag: 02.06.1997
(51) Int. Cl.: F28F 13/00, B29C 47/82, B29B 7/82, B01F 15/06, B29C 33/02

(54) **Verfahren sowie Anordnung zum Kühlen und/oder Heizen, insbesondere von Maschinen- oder Reaktorgehäusen**

(30) Priorität: 12.08.1996 CH 1973/96
(71) Anmelder: BUSS AG, 4133 Pratteln (CH)
(72) Erfinder: Caviezel, Thorsten, 4466 Ormalingen (CH); Deschler, Raphael, 4416 Bubendorf (CH); Tschopp, Patrick, 4303 Kaiseraugst (CH)
(74) Vertreter: Rottmann, Maximilian R.

(57) **Zusammenfassung**

Zur Kühlung und/oder zum Beheizen eines Körpers (2) wird ein Verfahren sowie eine Anordnung vorgeschlagen, bei dem der thermisch zu beeinflussende Körper (2) mit Kanälen (6) versehen ist, in denen Rohre (7) aufgenommen sind. Zwischen dem jeweiligen Rohr (7) und den Kanalwänden verbleibt ein Hohlraum (10), der mit einem bewegten Medium beaufschlagt wird. In den Rohren (7) selber zirkuliert ein Wärmeträgermedium. Um die zwischen dem jeweiligen Rohr (7) und den Kanalwänden bzw. dem Körper (2) pro Zeiteinheit übertragene Wärmeenergie zu variieren, kann das im Hohlraum (10) zirkulierende Medium geändert und/oder dessen Zusammensetzung und/oder dessen Fliessgeschwindigkeit variiert werden. Mit der vorliegenden Erfindung wird somit ein praxisnahes, den Gesetzen der Thermodynamik folgendes Verfahren sowie eine Anordnung vorgeschlagen, den Wärmestrom -Wärmemenge pro Zeiteinheit- verändern zu können. Über den Hohlraum (10) wird eine Zone innerhalb der Strecke zwischen Körper (2) und Wärmeträgermedium geschaffen, in der die limitierenden Grössen der Wärmeübertragung, nämlich Wärmeleitwiderstand und Wärmeübergangswiderstand beeinflusst werden können.

## Beschreibung

Die Erfindung betrifft ein Verfahren zum Kühlen und/oder Heizen, insbesondere von Maschinen- oder Reaktorgehäusen, nach dem Oberbegriff des Anspruchs 1. Im weiteren betrifft die Erfindung eine Anordnung zum Kühlen und/oder Heizen, insbesondere von Maschinen- oder Reaktorgehäusen, nach dem Oberbegriff des Anspruchs 12. Schliesslich wird im Anspruch 25 eine bevorzugte Verwendung der erfindungsgemässen Anordnung vorgeschlagen.

Am Beispiel einer Misch- und Knetmaschine soll nachfolgend die Problematik beim Kühlen solcher Maschinen erläutert werden. Die Temperaturen, unter denen die Materialien im Arbeitsraum von Misch- und Knetmaschinen verarbeitet werden, können in Abhängigkeit des zu verarbeitenden Materials und des gewünschten Verarbeitungsprozesses sehr stark variieren. Beispielsweise wird Polyetheretherketon (PEEK) bei einer Temperatur von ca. 380° bis ca. 400°C verarbeitet, währenddem andere Kunststoffe wie beispielsweise Polyethylen bei Temperaturen von ca. 120° bis 160°C verarbeitet werden. Um die Misch- und Knetmaschine auf die für die Verarbeitung des jeweiligen Materials gewünschte Temperatur zu bringen, müssen einerseits Heizvorrichtungen vorgesehen werden. Andererseits müssen die Misch- und Knetmaschinen mit Kühlsystemen versehen werden, da während des Knetvorgangs in die Materialien mechanische Energie eingeleitet wird oder teilweise ein exothermer Prozess abläuft, also Wärme eingebracht bzw. abgeben wird, die abgeführt werden muss, damit die Materialtemperatur während der Verarbeitung konstant gehalten werden kann. Zudem ist es oft wünschenswert, beispielsweise für Umbau- oder Unterhaltsarbeiten sowie auch am Chargenende, die Maschine in möglichst kurzer Zeit abzukühlen. Die eigentliche Schwierigkeit besteht nun darin, dass ein Kühlsystem, welches das Gehäuse auf einer Temperatur von ca. 140°C halten muss, ganz anders aufgebaut ist als ein solches, welches das Gehäuse auf einer Temperatur von beispielsweise 350°C halten muss.

Zudem ist bei der Fertigung der jeweiligen Maschine deren Einsatzzweck oft noch gar nicht bekannt, bzw. die zu verarbeitenden Stoffe und Rezepturen ändern sich im Laufe der Nutzungszeit der Maschine, so dass meist ein Kühlsystem eingebaut werden muss, welches einen breiten Anwendungsbereich abdeckt. Ein solches Kühlsystem stellt zwangsläufig einen Kompromiss dar, da die zumeist eingesetzten Kühlsysteme nur in einem relativ engen Temperaturbereich optimal arbeiten.

Die Problematik, die bei der Kühlung von unter hoher Temperatur stehenden Gehäusen besteht, ist bereits in der EP 0 548 021 ausführlich beschrieben worden. Aus der erwähnten EP-Schrift ist eine Kühlvorrichtung bekannt, welche ein Gehäuse und einen von diesem Gehäuse umschlossenen Arbeitsraum aufweist, in dem ein sich drehendes und/oder oszillierendes Arbeitsorgan aufgenommen ist. Zur Kühlung des Arbeitsraumes bzw. der zu verarbeitenden Materialien sind in das Gehäuse eingearbeitete Kühlkanäle vorgesehen, in welchen Hohlkörper angeordnet sind. Die Hohlkörper dienen der Aufnahme des Kühlmediums und stehen höchstens mit einem Teil ihrer Oberfläche mit den Begrenzungswänden der Kühlkanäle in direkter thermischer Verbindung. Durch diese Ausbildung wird die Wärmeübertragung zwischen Gehäuse und Kühlmedium begrenzt, so dass als Kühlmedium Wasser verwendet werden kann, und zwar auch dann, wenn der Verarbeitungsprozess bei Temperaturen von über 200°C stattfindet.

Obwohl sich derartige Kühlvorrichtungen in der Praxis bewährt haben, wäre es wünschenswert, die Kühlleistung der Vorrichtung stärker variieren zu können.

Wünschenswert wäre zudem auch, dass die Maschinengehäuse anwendungsneutral gefertigt werden können, unabhängig davon, welche späteren Prozesstemperaturen in der Maschine vorherrschen.

Es ist daher die Aufgabe der Erfindung, ein Verfahren zum Kühlen und/oder Heizen, insbesondere von Maschinen- oder Reaktorgehäusen, nach dem Oberbegriff des Anspruchs 1 zu schaffen, mittels welchem die Temperatur des thermisch zu beeinflussenden Körpers genauer eingehalten werden kann, welches ein breiteres Temperaturspektrum abdeckt und bei Bedarf eine schnellere Beeinflussung erlaubt und welches zudem anwendungsneutral einsetzbar und kostengünstig realisierbar sein soll.

Diese Aufgabe wird durch die im Kennzeichen des Anspruchs 1 aufgeführten Verfahrensschritte gelöst.

Die Grundlage der Erfindung beruht darauf, dass in dem thermisch zu beeinflussenden Körper zwei getrennten Kühl- bzw. Heizkreisläufe aufrechterhalten werden. Der erste Kreislauf wird durch eine in Rohren zirkulierende Flüssigkeit gebildet, während der zweite Kreislauf durch ein im Hohlraum zwischen dem jeweiligen Rohr und den Kanalwänden zirkulierendes Medium gebildet wird. Um die Wärmeübertragungsleistung zwischen der im Rohr zirkulierenden Flüssigkeit und dem thermisch zu beeinflussenden Körper zu verändern, wird, je nach Bedarf, das Medium geändert und/oder dessen Zusammensetzung und/oder dessen Fliessgeschwindigkeit variiert. Auf diese Weise ist es möglich, die Temperatur des thermisch zu beeinflussenden Körpers über ein sehr breites Temperaturspektrum in der gewünschten Weise zu beeinflussen.

Ein weiterer Vorteil dieses Verfahrens liegt darin, dass der Körper sehr homogen gekühlt bzw. erhitzt werden kann, da innerhalb des thermisch zu beeinflussenden Körpers ein kontinuierlicher Wärmeaustausch zwischen dem im Hohlraum zirkulierenden Medium und der Flüssigkeit im Rohr stattfindet. Versuche haben gezeigt, dass die Temperaturdifferenz des im Rohr zirkulierenden Mediums zwischen Einlass und Auslass sehr gering ist. Als weiterer Vorteil kann angeführt werden, dass durch den kontinuierlichen Wärmeaustausch zwischen den beiden Medien die Eintrittstemperatur eines in den Hohlraum geleiteten Gases eine untergeordnete Rolle spielt, da sich die Temperatur des Gases kurz nach dem Eintritt in den zu kühlenden Körper auf einem bestimmten Niveau einpendelt. Dies ist insbesondere der Fall, wenn im Hohlraum eine turbulente Strömung erzeugt wird, wie dies in einem bevorzugten Ausführungsbeispiel vorgeschlagen wird.

In einem weiteren, bevorzugten Ausführungsbeispiel wird vorgeschlagen, dem im Hohlraum zirkulierenden Gas eine Flüssigkeit beizumengen. Dies bewirkt, dass sich die pro Zeiteinheit zwischen dem jeweiligen Rohr und dem Gehäuse übertragene Wärmeenergie erhöht.

Eine weitere Aufgabe der Erfindung besteht darin, eine Anordnung gemäss dem Oberbegriff des Anspruchs 12 derart auszubilden, dass die Temperatur des thermisch zu beeinflussenden Körpers stark variierbar ist und über einen weiten Temperaturbereich konstant gehalten werden kann.

Diese Aufgabe wird durch die im Kennzeichen des Anspruch 12 angeführten Merkmale gelöst.

Bei einer bevorzugten Ausführungsform der Anordnung ist vorgesehen, die Aussen- und/oder Innenfläche der Rohre gewellt auszubilden. Durch die Wahl der inneren bzw. äusseren Rohroberfläche kann die Strömung sowohl im wie auch aussen um das Rohr herum beeinflusst werden. Eine beispielsweise gewellte Mantelfläche des Rohres bewirkt schon bei relativ kleinen Strömungsgeschwindigkeiten des durch den Hohlraum und im Rohr strömenden Mediums eine turbulente Strömung. Eine turbulente Strömung im Hohlraum ist insbesondere dann vorteilhaft, wenn dieser, wie in einem bevorzugten Ausführungsbeispiel vorgeschlagen, von einem Gas durchströmt wird. Zur Erhöhung der Kühlleistung kann dem Gas eine Flüssigkeit, beispielsweise Wasser, beigemengt werden, wobei das Wasser entlang des Strömungsweges zwischen heissem Gehäuse und kaltem Rohr mehrmals verdampft und wieder kondensiert, so dass die Verdampfungs- und Kondensationsenthalpie des Wassers mehrfach genutzt wird.

Nachfolgend soll ein Ausführungsbeispiel der Erfindung anhand von Zeichnungen näher erläutert werden. In diesen Zeichnungen zeigt:
- Fig. 1: einen Teilschnitt durch ein schematisch dargestelltes Gehäuse einer Misch- und Knetmaschine;
- Fig. 2: eine Prinzipskizze einer Anordnung zum Kühlen der Misch- und Knetmaschine;
- Fig. 3: eine Detailansicht eines abgewinkelten Kanales zusammen mit darin aufgenommenen Rohren, und
- Fig. 3a: einen vergrösserten Ausschnitt der Fig. 3.

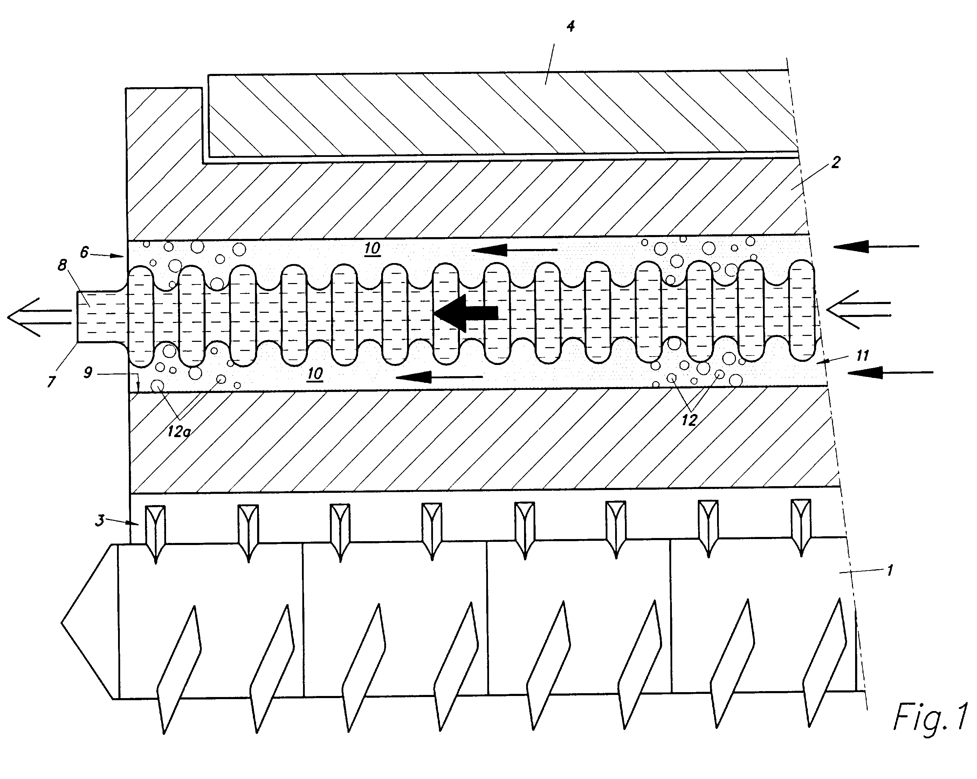

Anhand der Fig. 1 soll das Grundprinzip des erfindungsgemässen Verfahrens dargelegt werden. Dazu ist ein Teilschnitt durch ein schematisch dargestelltes Gehäuse 2 einer Misch- und Knetmaschine gelegt. Das eigentliche Arbeitsorgan 1 der Misch- und Knetmaschine ist ebenfalls schematisch eingezeichnet. Zum Beheizen des Gehäuses 2 bzw. des Arbeitsraumes 3 ist im vorliegenden Beispiel eine elektrisch betriebene Heizplatte 4 vorgesehen, welche aussen am Gehäuse 2 angeordnet ist. Das Gehäuse 2 selber ist mit Kühlkanälen 6 versehen, die beispielsweise durch Bohren hergestellt werden. In diesen Kühlkanälen 6 sind Rohre 7 in Form von Wellschläuchen aufgenommen, wobei nur jeweils ein Kanal 6 und ein Rohr 7 eingezeichnet sind. Zwischen dem Rohr 7 und den Kanalwänden 9 verbleibt ein Hohlraum 10, durch den ein bewegtes Medium 11 geleitet wird, währenddem im Rohr 7 eine Flüssigkeit 8, vorzugsweise Wasser, zirkuliert. Um die Wärmeübertragung zwischen den Kanalwänden 9 bzw. dem Gehäuse 2 und dem Rohr 7 bzw. der darin zirkulierenden Flüssigkeit 8 zu beeinflussen, bestehen folgende Möglichkeiten:
1. Durch den Hohlraum 10 wird bewegte Luft geleitet;
2. Durch den Hohlraum 10 wird bewegte Luft geleitet, der intervallweise eine Flüssigkeit beigemengt wird;
3. Durch den Hohlraum 10 wird bewegte Luft geleitet, der kontinuierlich eine Flüssigkeit beigemengt wird, und
4. Der Hohlraum 10 wird mit einer Flüssigkeit geflutet.

Bei jedem der geschilderten Betriebszustände kann zusätzlich die Geschwindigkeit des im Hohlraum 10 zirkulierenden Mediums 11 variiert werden, so dass sich natürlich auch die Wärmeübertragung zwischen dem Rohr 7 und den Kanalwänden 9 bzw. zwischen der im Rohr 7 zirkulierenden Flüssigkeit 8 und den Kanalwänden 9 ändert. Beim zweiten, der geschilderten Betriebszustände bestehen zudem weitere Beeinflussungsmöglichkeiten. So kann die Zeitdauer der Beimengung und/oder der Zeitabstand zwischen zwei Intervallen und/oder die Menge der jeweils beigemengten Flüssigkeit, welche in Form von Tropfen 12 dargestellt ist, variiert werden.

Eine andere Möglichkeit der Beeinflussung der Wärmeübertragung zwischen dem Rohr 7 und den Kanalwänden 9 besteht darin, dass unterschiedliche Medien zum Einsatz kommen. Auch kann die Vorlauf-Temperatur der im Rohr zirkulierenden Flüssigkeit sowie deren Fliessgeschwindigkeit den Anforderungen entsprechend verändert werden.

Schliesslich kann durch Wahl der äusseren sowie allenfalls der inneren Oberfläche des Rohres 7 die Wärmeübertragung beeinflusst werden, da durch die Oberflächengestaltung nicht nur die Gesamtoberfläche des Rohres 7 sondern auch die Strömung im Rohr 7 selber sowie auch im Hohlraum 10 beeinflusst werden kann. Letztlich kann auch durch die Wahl der absoluten wie auch der relativen Dimension(en) des Kanal- und des Rohrdurchmessers, die Wärmeübertragung beeinflusst werden.

Bei einer derartigen Anordnung findet ein kontinuierlicher Wärmeaustausch zwischen dem im Hohlraum 10 zirkulierenden Medium 11 und der Flüssigkeit im Rohr 7 statt. Dies bewirkt, dass ein im Hohlraum 10 zirkulierendes Gas sehr schnell eine mittlere Temperatur, die zwischen der des Gehäuses 2 und der des Rohres 7 liegt, annimmt und sich seine Temperatur während des Durchströmens des Hohlraumes 10 nur noch unwesentlich ändert, wodurch sich eine homogene Kühlung des Gehäuses 2 ergibt.

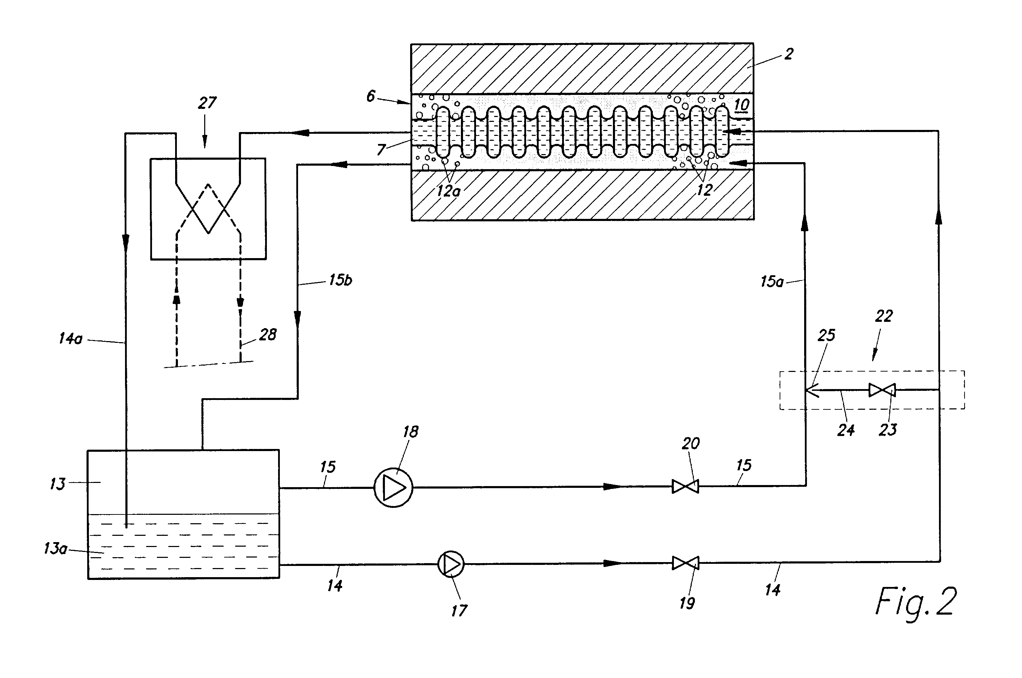

Fig. 2 zeigt in einer Prinzipskizze die wesentlichen Elemente der Anordnung zum Kühlen eines Maschinengehäuses 2. Korrespondierende Teile tragen dabei die gleichen Bezugszeichen wie in der Fig. 1. Nebst dem zu kühlenden Gehäuse 2 sind aus dieser Darstellung ein Behälter 13, zwei Abgangsleitungen 14, 15, zwei Fördermittel 17, 18, zwei Sperrventile 19, 20, eine Einrichtung 22 sowie ein Wärmetauscher 27 ersichtlich.

Der Behälter 13 dient der Aufnahme eines flüssigen Kühlmediums 13a, welches im vorliegenden Fall aus Wasser 13a besteht. Von diesem Behälter 13 gehen die beiden Abgangsleitungen 14, 15 aus. Die untere Leitung 14 dient dem Zuführen von Kühlwasser 13a indem diese den Behälter 13 mit dem im Kanal 6 des Gehäuses 2 aufgenommenen Rohr 7 verbindet. Die obere Leitung 15 führt vom oberen mit Luft gefüllten Abschnitt des Behälters 2 zum Hohlraum 10 des Gehäuses 2. Vom Gehäuse 2 führt sowohl die Kühlwasserleitung 14a wie auch die Gasleitung 15b in den Behälter 13 zurück. Zur Förderung des jeweiligen Mediums sind beide Abgangsleitungen 14, 15 mit je einem Fördermittel 17, 18 versehen, wobei im Falle der Flüssigkeitsleitung 14 eine Pumpe 17 und im Falle der Gasleitung 15 ein Gebläse 18 vorgesehen ist. Zudem verfügen beide Leitungen 14, 15 über je ein Sperrventil 19, 20.

Die Einrichtung 22 dient der Zufuhr von Flüssigkeit in die Leitung 15a, wobei die Flüssigkeit aus der Leitung 14 überführt wird. Dazu weist die Einrichtung 22 ein Ventil 23, eine Verbindungsleitung 24 sowie eine Düse 25 auf.

Zum Kühlen der im Rohr 7 zirkulierenden Flüssigkeit ist der Auslass des Rohres 7 mit dem Wärmetauscher 27 verbunden, der seinerseits an einer Kaltwasserleitung 28 angeschlossen ist.

Die Funktionsweise dieser Anordnung stellt sich folgendermassen dar:

Bei normalen Kühlbedarf zirkuliert im Rohr 7 Wasser und im Hohlraum 10 Luft. Das Wasser 13a wird dem Behälter 13 entnommen und von der Pumpe 17 über das geöffnete Ventil 19 dem Rohr 7 zugeführt. Die dem Behälter 13 entnommene Luft wird über das Gebläse 18 und das geöffnete Ventil 20 dem Hohlraum 10 zugeführt. Das im Rohr 7 zirkulierende Kühlwasser wird nach dem Verlassen des Gehäuses 2 im Wärmetauscher 27 gekühlt, von wo es in den Behälter 13 zurückfliesst. In diesem Betriebszustand ist das Ventil 23 geschlossen.

Bei erhöhtem Kühlbedarf wird der dem Hohlraum 10 über die Gasleitung 15a zugeführten Luft mittels der Einrichtung 22 intervallweise Wasser zudosiert. Dazu wird das Ventil 23 jeweils kurzzeitig geöffnet. Bei geöffnetem Ventil 23 strömt über die Verbindungsleitung 24 und die Düse 25 Flüssigkeit von der Leitung 14 in die Leitung 15a. Die vom Luftstrom mitgerissene Flüssigkeit ist im Gehäuse 2 andeutungsweise in Form von Tropfen 12, 12a dargestellt. Die wellige Mantelfläche des Rohres 7 begünstigt eine turbulente Strömung sowohl im Hohlraum 10 wie auch im Rohr 7. Die beigemengte Flüssigkeit 12, 12a verdampft und kondensiert mehrmals entlang des Rohres 7, wobei die Wellen des Rohres das gleichmässige Abtropfen des Kondensates begünstigen.

Wenn der Hohlraum 10 von einem bewegten Gas durchströmt wird, kann die Wärmeübertragung zwischen dem Rohr 7 und dem Gehäuse 2 dadurch beeinflusst werden, dass die Zeitdauer der Flüssigkeitsbeimengung und/oder der Zeitabstand zwischen zwei Intervallen variiert wird.

Eine dritte Kühlvariante besteht darin, dass der Hohlraum 10 des Gehäuses 2 mit Wasser geflutet wird. Dazu wird das Gebläse 18 ausgeschaltet und das Ventil 20 geschlossen. Danach wird der Leitung 15a über die Einrichtung 22 kontinuierlich Wasser zugeführt indem das Ventil 23 geöffnet wird. In diesem Fall wird das Gehäuse 2 maximal gekühlt.

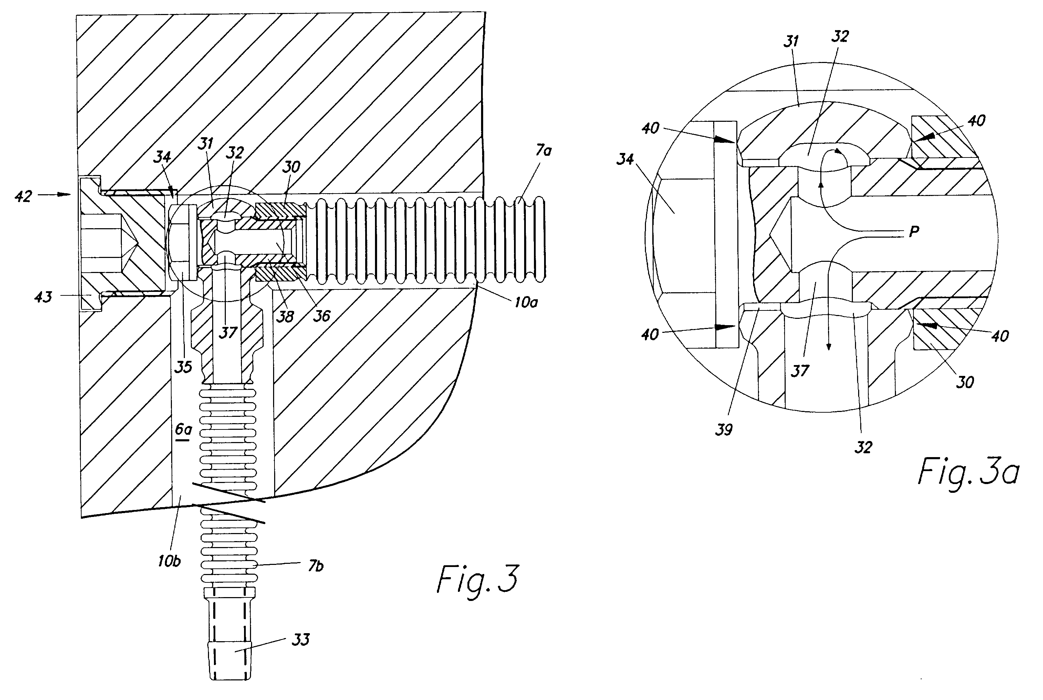

Fig. 3 zeigt eine Detailansicht eines Gehäuses 2a und Fig. 3a einen vergrösserter Ausschnitt daraus. In diesem Beispiel sind die Kanäle um 90° abgewinkelt, wobei aus der Fig. 3 nur eine Umlenkung eines einzelnen Kanales 6a ersichtlich ist. Um die im Kanal 6a aufzunehmenden Rohre 7a, 7b um eine solche Umlenkung herumführen zu können, sind Verbindungselemente vorgesehen, mittels denen die einzelnen Rohre 7a, 7b unter einem rechten Winkel zusammenfügbar sind. Die einzelnen Rohre 7a, 7b sind dazu an ihren Enden mit Anschlussteilen 30, 31 versehen. Im vorliegenden Beispiel weist das horizontal verlaufende Rohr 7a endseitig eine Gewindebuchse 30 auf, währenddem das vertikal verlaufende Rohr 7b am oberen Ende mit einem Ringnippel 31 versehen ist, der auf der Innenseite eine Ringnut 32 aufweist. Um die beiden Rohre 7a, 7b miteinander zu verbinden, ist ein Schraubmittel 34 vorgesehen, welches als Hohlschraube ausgebildet ist und aus einem Kopfteil 35 und einem daran anschliessenden Schaft 38 besteht. Der Schaft 38 ist am vorderen Ende mit einem Aussengewinde versehen. Im weiteren ist eine Längsbohrung 36 in den Schaft 38 eingelassen, welche von einer Querbohrung 37 durchsetzt ist. Diese Querbohrung 37 korrespondiert mit der Nut 32 im Ringnippel 31, wodurch die beiden Rohre 7a, 7b hydraulisch miteinander verbunden sind und die Flüssigkeit über die Gewindebuchse 30, die Hohlschraube 34 und den Ringnippel 31 vom einen zum anderen Rohr 7a, 7b fliessen kann, was durch Pfeile P angedeutet ist. Um die Rohre 7a, 7b ohne den Einsatz von Dichtungen miteinander verbinden zu können, ist der Ringnippel 31 mit zwei Dichtkanten 40 (Fig. 3a) versehen, welche sich und das Gegenstück unter der Anzugskraft der Hohlschraube 34 plastisch verformen. Dadurch wird sichergestellt, dass sich die Gewindebuchse 30 dichtend an den Ringnippel 31 und letzterer dichtend an die Hohlschraube 34 anpresst, so dass auf jegliche, zusätzlichen Dichtmittel verzichtet werden kann. Das vertikal verlaufende Rohr 7b ist am unteren Ende mit einem Schlauchstutzen 33 versehen, an dem ein korrespondierender Schlauch angeschlossen werden kann.

Um die beiden Rohre 7a, 7b im Kanal 6a zusammenschrauben zu können, ist die horizontal verlaufende Kanalbohrung mit einer nach aussen führenden Durchgangsbohrung 42 versehen. Diese Durchgangsbohrung 42 wird nach dem Zusammenschrauben der beiden Rohre 7a, 7b durch einen einschraubbaren Stopfen 43 abgedichtet.

Die Vorteile der vorgängig beschriebenen Anordnung lassen sich somit wie folgt zusammenfassen:
- Sehr stark variierbare Kühlleistung;
- Umweltfreundliche Kühlmedien, (keine Wärmeträgeröle nötig);
- Sichere Arbeitsweise da die eingesetzte Kühlflüssigkeit (Wasser) auch bei hohen Gehäusetemperaturen praktisch drucklos zirkulieren kann;
- Effiziente Wirkungsweise; im Mischbetrieb bei Einsatz von Wasser mehrfache Nutzung der Verdampfungs- und Kondensationsenthalpie;
- Wellschlauch erzeugt innen wie aussen turbulente Strömungen, daher gute Wärmeübertragung auch bei geringen Mediengeschwindigkeiten;
- Homogene Kühlung des Gehäuses;
- Gehäuse können universell hergestellt werden. Ein Umrüsten von konventionell mit Öl- oder Wasser- temperierten Gehäusen auf dieses System ist möglich.

Zusammenfassend kann festgehalten werden, dass das vorgängig umschriebene Verfahren der thermischen Beeinflussung eines Körpers über ein Wärmeträgermedium dient. Der dabei stattfindende Wärmeaustausch folgt den Gesetzen der Thermodynamik. Auf der Basis des umschriebenen Prinzips wird ein praxisnahes Verfahren sowie eine Anordnung vorgeschlagen, den Wärmestrom -Wärmemenge pro Zeiteinheit- verändern zu können. Über den Hohlraum wird eine Zone innerhalb der Strecke zwischen Körper und Wärmeträgermedium geschaffen, in der die limitierenden Grössen der Wärmeübertragung, nämlich Wärmeleitwiderstand und Wärmeübergangswiderstand beeinflusst werden können. Dies kann erfolgen über verschiedene Medien und deren Kombination sowie über deren Strömungsgeschwindigkeiten. Auch die Formgebung und Ausgestaltung der Anordnung bietet entsprechende Beeinflussungsmöglichkeiten.

Zu erwähnen ist, dass mit dem beschriebenen Verfahren sowie der entsprechenden Anordnung prinzipiell jeder Gegenstand bzw. jede Art von Körper gekühlt werden kann. Auch muss betont werden, dass sich das Verfahren sowie die Anordnung nicht nur zum Kühlen eignet, sondern dass ebenso Gegenstände jeglicher Art erhitzt werden können. Auch ein wechselweiser Betrieb, bei dem die Anordnung bzw. das Verfahren sowohl zum Erwärmen wie auch zum Abkühlen des jeweiligen Gegenstandes eingesetzt wird, ist möglich.

## Patentansprüche

1. Verfahren zum Kühlen und/oder Heizen, insbesondere von Maschinen- oder Reaktorgehäusen (2), wobei der thermisch zu beeinflussende Körper (2) mit Kanälen (6, 6a) versehen ist, in denen Rohre (7, 7a, 7b) aufgenommen sind, die höchstens mit einem Teil ihrer Oberfläche mit den Kanalwänden in Verbindung stehen und zur Aufnahme einer Flüssigkeit ausgebildet sind, **dadurch gekennzeichnet,** dass durch einen zwischen dem jeweiligen Rohr (7, 7a, 7b) und den Kanalwänden bestehenden Hohlraum (10, 10a, 10b) ein bewegtes Wärmeübertragungs-Medium geleitet wird, und dass zur Veränderung der pro Zeiteinheit zwischen dem jeweiligen Rohr (7, 7a, 7b) und dem Körper (2) bzw. den Kanalwänden übertragenen Wärmeenergie das Medium geändert und/oder dessen Zusammensetzung und/oder dessen Strömungsgeschwindigkeit variiert wird.

2. Verfahren nach Anspruch 1, dadurch gekennzeichnet, dass als Medium, welches im Hohlraum (10) zwischen dem jeweiligen Rohr (7, 7a, 7b) und den Kanalwänden zirkuliert, ein Gas (11) verwendet wird, dem bei Bedarf eine Flüssigkeit (12, 12a) beigemengt wird.

3. Verfahren nach Anspruch 2, dadurch gekennzeichnet, dass das Beimengen der Flüssigkeit (12, 12a) intervallmässig erfolgt.

4. Verfahren nach Anspruch 2 oder 3, dadurch gekennzeichnet, dass die beigemengte Flüssigkeit (12, 12a) einem den Rohren (7, 7a, 7b) zuzuführenden Flüssigkeitsstrom entnommen wird.

5. Verfahren nach einem der Ansprüche 2 bis 4, dadurch gekennzeichnet, dass als Gas Luft und als Flüssigkeit Wasser verwendet wird.

6. Verfahren nach Anspruch 1, dadurch gekennzeichnet, dass zur Erhöhung der pro Zeiteinheit zwischen dem jeweiligen Rohr (7, 7a, 7b) und dem Körper (2) übertragenen Wärmeenergie der Hohlraum (10, 10a, 10b) mit einer Flüssigkeit geflutet wird.

7. Verfahren nach Anspruch 6, dadurch gekennzeichnet, dass als Flüssigkeit Wasser verwendet wird.

8. Verfahren nach Anspruch 6 oder 7, dadurch gekennzeichnet, dass die im Hohlraum (10, 10a, 10b) zwischen dem jeweiligen Rohr (7, 7a, 7b) und den Kanalwänden zirkulierende Flüssigkeit einem den Rohren (7, 7a, 7b) zuzuführenden Flüssigkeitsstrom entnommen wird.

9. Verfahren nach einem der vorhergehenden Ansprüche, dadurch gekennzeichnet, dass zur Erhöhung der pro Zeiteinheit zwischen dem jeweiligen Rohr (7, 7a, 7b) und dem Körper (2) übertragenen Wärmeenergie eine turbulente Strömung in den Hohlräumen (10, 10a, 10b) und/oder im Rohr (7) erzeugt wird.

10. Verfahren nach einem der vorhergehenden Ansprüche, dadurch gekennzeichnet, dass zusätzlich die Temperatur und/oder Geschwindigkeit der in den Rohren (7, 7a, 7b) zirkulierenden Flüssigkeit variiert wird.

11. Verfahren nach einem der vorhergehenden Ansprüche, dadurch gekennzeichnet, dass die in den Rohren (7, 7a, 7b) zirkulierende Flüssigkeit durch einen Wärmetauscher (27) geleitet wird, in welchem sie gekühlt bzw. erhitzt wird.

12. Anordnung zum Kühlen und/oder Heizen, insbesondere von Maschinen- oder Reaktorgehäusen (2), wobei der thermisch zu beeinflussende Körper (2) mit Kanälen (6, 6a) versehen ist, in denen Rohre (7, 7a, 7b) aufgenommen sind, die höchstens mit einem Teil ihrer Oberfläche mit den Kanalwänden in Verbindung stehen und zur Aufnahme eines flüssigen Mediums ausgebildet sind, **dadurch gekennzeichnet,** dass Mittel (15, 15a, 18; 14, 17, 22) zur Durchleitung eines bewegten Mediums durch einen zwischen dem jeweiligen Rohr (7, 7a, 7b) und den Kanalwänden gebildeten Hohlraum (10, 10a, 10b) vorgesehen sind.

13. Anordnung nach Anspruch 12, dadurch gekennzeichnet, dass die Aussen- und/oder Innenfläche der Rohre (7, 7a, 7b) gewellt ausgebildet ist.

14. Anordnung nach Anspruch 12 oder 13, dadurch gekennzeichnet, dass die Mittel eine erste Vorrichtung (18) umfassen, mittels welcher ein bewegtes Gas durch den Hohlraum bzw. die Hohlräume (10, 10a, 10b) leitbar ist, und dass die Mittel eine zweite Vorrichtung (22) umfassen, mittels welcher dem bewegten Gas eine Flüssigkeit beimengbar oder eine Flüssigkeit durch die Hohlräume (10, 10a, 10b) leitbar ist.

15. Anordnung nach Anspruch 14, dadurch gekennzeichnet, dass die zweite Vorrichtung (22) eine Einrichtung (23, 24, 25) umfasst, mittels welcher die Flüssigkeit einem den Rohren (7, 7a, 7b) zuzuführenden Flüssigkeitsstrom entnehmbar ist.

16. Anordnung nach Anspruch 15, dadurch gekennzeichnet, dass die Einrichtung (23, 24, 25) intervallmässig betätigbar ist.

17. Anordnung nach einem der Ansprüche 12 bis 16, dadurch gekennzeichnet, dass die Rohre (7, 7a, 7b) mit einem Wärmetauscher (27) gekoppelt sind.

18. Anordnung nach einem der Ansprüche 12 bis 17, dadurch gekennzeichnet, dass die Rohre (7a, 7b) jeweils endseitig mit einem Anschlussteil (30, 31) versehen sind, mittels welchem sie mit einem weiteren Rohr verbindbar sind.

19. Anordnung nach Anspruch 18, dadurch gekennzeichnet, dass das Anschlussteil als Gewindebuchse (30) ausgebildet ist.

20. Anordnung nach Anspruch 18, dadurch gekennzeichnet, dass das Anschlussteil als Ringnippel (31) ausgebildet ist, welcher mit einer unter einem zumindest annähernd rechten Winkel zur Rohrlängsachse verlaufenden Bohrung (39) versehen ist, wobei auf der Innenseite des Ringnippels (31) eine ringförmig verlaufende Nut (32) vorgesehen ist.

21. Anordnung nach Anspruch 19 oder 20, dadurch gekennzeichnet, dass der Ringnippel (31) Dichtkanten (40) aufweist, welche sich und das Gegenstück unter der Anzugskraft der Schraubmittel (34) plastisch verformen.

22. Anordnung nach einem der Ansprüche 18 bis 21, dadurch gekennzeichnet, dass Schraubmittel (34) vorgesehen sind, welche einen Schaft (38) aufweisen, in den eine Längsbohrung (36) eingelassen ist, wobei eine radial in die Längsbohrung (36) mündende Querbohrung (37) vorgesehen ist, welche auf zwei Seiten radial aus dem Schaft (38) herausführt.

23. Anordnung nach Anspruch 22, dadurch gekennzeichnet, dass jedes Schraubmittel (34) einen Kopfteil (35) aufweist, auf dessen dem Schaft (38) zugewandten Seite eine Ringfläche angeformt ist, und dass der Abstand zwischen dieser Ringfläche und dem Zentrum der Längsachse der Querbohrung (37) zumindest annähernd dem Abstand zwischen der Dichtkante (40) des Ringnippels (31) und der die Querbohrung des Ringnippels (31) begrenzenden Aussenfläche bzw. dem Zentrum der darin eingelassen Nut (32) entspricht, so dass bei zusammengefügten Rohren (7a, 7b) die Querbohrung (37) des Schraubmittels (34) mit der in den Ringnippel (31) eingelassenen Nut (32) korrespondiert.

24. Anordnung nach einem der Ansprüche 12 bis 23, dadurch gekennzeichnet, dass die Rohre (7, 7a, 7b) flexibel ausgebildet sind.

25. Verwendung der Anordnung nach einem der Ansprüche 12 bis 24 zur Kühlung von Misch- und Knetvorrichtungen.
